# DEMANDE DE BREVET EUROPEEN

(11) **EP 2 887 271 A1**
(43) Date de publication de la demande: **24.06.2015**
(21) Numéro de dépôt: 13306749.6
(22) Date de dépôt: 17.12.2013
(51) Int. Cl.: G06K 19/07, G06K 19/077

(54) **Dispositif de paiement à double interface avec afficheur**

(71) Demandeur: Gemalto SA, 92190 Meudon (FR)
(72) Inventeur: Thill, Michel, 92190 Meudon (FR)
(74) Mandataire: Cour, Pierre

(57) **Abrégé**

L'invention se rapporte à un dispositif de paiement 100 comportant un circuit intégré sécurisé SE à double interface. Un connecteur 110 est relié à l'interface à contact afin de communiquer avec un lecteur externe. Une antenne 140 est reliée à l'interface sans contact. Le dispositif comporte également un circuit lecteur 120, 130, 150 compatible avec le circuit intégré sécurisé SE, le circuit lecteur étant connecté en parallèle sur le connecteur 110. Une batterie autonome BAT sert à alimenter le circuit lecteur. Un circuit de commutation d'alimentation 160 relié à un circuit de détection de champ de communication 170, ledit circuit de commutation d'alimentation étant apte à alimenter le circuit lecteur après détection d'un champ de communication.

## Description

L'invention se rapporte à dispositif de paiement à double interface avec afficheur. Plus particulièrement, elle se rapporte à une utilisation de ce type de dispositif de paiement en mode sans contact avec un niveau de sécurité élevé.

Par dispositif de paiement à double interface, on se rapporte plus particulièrement à des cartes à puces à double interface disposant en outre d'un afficheur et d'un clavier. Bien que décrit à l'aide d'un exemple de carte à puce, le dispositif de paiement objet de l'invention n'est pas limité à un format de carte de crédit mais peut par exemple être un dispositif portable analogue tel que par exemple une clef USB disposant une interface sans contact, dans ce cas, là, l'interface ISO 7816 décrite dans cette demande est à remplacer par une interface USB.

Les cartes à double interfaces communément utilisées sont des cartes disposant d'une interface de communication sans contact et d'une interface de communication à contact. Pour les cartes bancaires, il est courant d'utiliser ces cartes avec un lecteur sécurisé afin d'utiliser un code d'autorisation de transaction. L'opération reste complètement sécurisée dès lors que le lecteur est un lecteur certifié.

Les cartes à puce avec afficheur sont connues depuis très longtemps. Cependant, afin de conserver le caractère de sécurisation de la puce sécurisé de la carte à puce, il est connu de dissocier les fonctions de transaction sécurisée et d'affichage. A cet effet, la demande GMT0828 dévoile une carte à puce disposant d'un lecteur de carte intégré permettant de conserver toute l'intégrité de la puce sécurisée assurant les transactions tout en permettant d'interagir avec celle-ci pour afficher des informations provenant de cette puce sécurisée. Le lecteur intégré dans la carte se trouve être un lecteur « sécurisé » pour le porteur de carte seul le porteur de carte en a l'accès et le lecteur ne dispose pas d'accès avec un réseau externe.

En terme de transaction électronique, il est connu d'effectuer des transactions qui ne sont pas complètement sécurisée pour des raisons pratique. Certaines transactions pour de faible montant ne vérifient pas le code d'autorisation de la carte. La fraude se trouve être alors limité par le faible montant de la transaction.

Le développement des téléphones intelligents disposant de navigateurs évolués et d'interface de communication sans contact compatible avec les cartes à puce (ISO14443) permet de sécuriser une transaction par internet à l'aide d'un paiement avec carte à puce en utilisant un code d'autorisation. Cependant, les téléphones portables ne sont pas sécurisés. En effet, les téléphones portables sont des systèmes communicants ouverts qui peuvent recevoir de nouvelles applications et notamment des applications malignes pouvant intercepter ce qui est affiché sur l'écran ou rentrer au niveau d'un clavier ou d'un écran tactile. Ce type d'application maligne permet ainsi de voler le code d'autorisation qui peut ultérieurement être utilisé après le vol de la carte.

Afin de remédier à l'inconvénient précité, il est connu, de par la demande Européenne déposée le 19 juillet 2013 sous le n °13306035.0, une méthode de transaction sans contact avec une carte à afficheur dans laquelle un premier échange sans contact envoie à la puce sécurisée une demande de transaction avec le montant désiré depuis un téléphone (ou un autre lecteur non certifié). Une fois cette première transaction effectuée, le lecteur intégré de la carte à afficheur vient lire le montant de la transaction en attente et le porteur de la carte peut alors valider la transaction en entrant le code d'autorisation. Une deuxième transaction sans contact peut ensuite être réalisée en renvoyant un message validant la transaction au téléphone qui peut ensuite la transmettre à un serveur de la banque pour l'enregistrement final.

Le procédé ainsi décrit est fiable mais présente comme inconvénient majeur que la transaction s'effectue en trois étapes distinctes. En effet, deux opérations sont réalisées sans contact et une autre est réalisée par contact avec le lecteur embarqué dans la carte. De part l'exclusion d'un fonctionnement simultanée des deux types d'interface, il est préférable d'avoir une réelle séparation des opérations. Ce type d'opération n'est pas fluide pour un utilisateur quelconque qui doit gérer la mise en route et l'arrêt du lecteur embarqué dans la carte. De ce fait, il est difficile de déployer une telle solution à grande échelle.

L'invention propose de remédier au problème de fluidité par une réalisation d'un enchainement automatique des trois opérations qui soit transparent à l'utilisateur. Pour ce faire un circuit de gestion d'énergie va contrôler le démarrage du lecteur et l'alimentation du circuit sécurisé entre les deux transactions sans contact. Cela permet en outre d'avoir une continuité d'alimentation dans le circuit sécurisé de la carte qui permet de réaliser la transaction en utilisant la mémoire RAM sans avoir recours à une mémorisation en mémoire non volatile.

Plus particulièrement l'invention est un dispositif de paiement comportant un circuit intégré sécurisé, au moins un connecteur, au moins une antenne, un circuit lecteur et une batterie autonome. Le circuit intégré sécurisé dispose d'une interface sans contact, d'une interface à contact et d'un circuit de traitement, ledit circuit intégré pouvant être alimenté par son interface à contact ou par son interface sans contact. Le connecteur est relié à l'interface à contact afin de communiquer avec un lecteur externe. L'antenne est reliée à l'interface sans contact, et elle est destinée alimenter le circuit intégré sécurisé et à communiquer avec un lecteur émettant un champ de communication. Le circuit lecteur est compatible avec le circuit intégré sécurisé et il inclut un afficheur et des touches d'entrée, le circuit lecteur étant connecté en parallèle sur le connecteur. La batterie autonome sert à alimenter le circuit lecteur. Un circuit de commutation d'alimentation est relié à un circuit de détection de champ de communication apte à alimenter le circuit lecteur après détection d'un champ de communication.

Selon un autre aspect, l'invention est un procédé d'alimentation d'un dispositif de paiement comportant un circuit intégré sécurisé disposant d'une interface sans contact, d'une interface à contact et d'un circuit de traitement, ledit circuit intégré pouvant être alimenté par son interface à contact ou par son interface sans contact, ledit dispositif comportant un circuit lecteur compatible avec le circuit intégré sécurisé incluant un afficheur et des touches d'entrée, le circuit lecteur étant connecté en parallèle sur un connecteur de l'interface à contact et étant alimenté par batterie autonome. Le procédé consiste à alimenter le circuit lecteur après détection d'un champ de communication.

L'invention sera mieux comprise à la lecture de la description qui va suivre et qui fait référence aux dessins annexés parmi lesquels :
la figure 1 montre une carte à puce avec afficheur,
la figure 2 montre un schéma fonctionnel d'une carte à puce avec afficheur,
la figure 3 illustre un premier mode de réalisation d'une carte à puce selon l'invention
la figure 4 illustre un deuxième mode de réalisation de l'invention,
La figure 5 montre un exemple de réalisation d'un circuit de commutation d'alimentation.

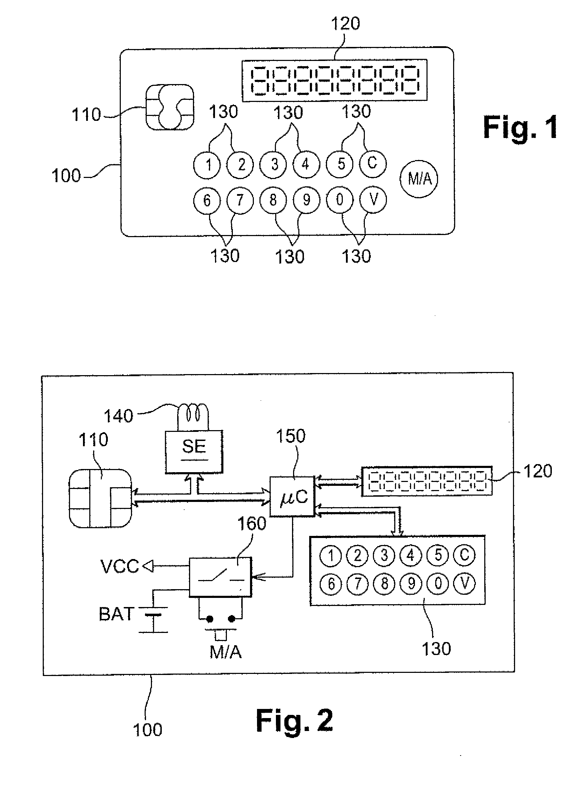

Les figures 1 et 2 représentent une carte à puce 100 disposant d'un connecteur 110, d'un afficheur 120, de touches formant un clavier 130 et d'un bouton de mise en route M/A. Cette carte à puce100 comporte un circuit intégré sécurisé SE disposant d'une interface à contact reliée au connecteur 110 et d'une interface sans contact reliée à une antenne 140. L'afficheur 120 et le clavier 130 font partie d'un lecteur de carte réalisé autour d'un circuit de type microcontrôleur 150, relié à une batterie BAT. Le bouton de mise en route M/A commande un circuit de commutation 160 qui va fournir une tension d'alimentation VCC utilisée par les circuits de la partie lecteur de carte.

Les figures 1 et 2 correspondent à une carte de l'état de la technique, el que par exemple décrit dans WO2011 /151309. Une carte de ce type permet d'afficher le solde du compte relié à la carte, le montant des derniers achats le cumul des achats du mois, ainsi que toute information présente dans la carte. Il est possible de s'authentifier par l'intermédiaire de l'entrée d'un code PIN sur le clavier 130 afin de visualiser des informations confidentielles ou de générer un mot de passe à usage unique. Avec une telle carte, il n'est pas possible d'enchainer une première transaction sans contact suivi d'une deuxième transaction de validation de code PIN par le clavier de la carte pour finir ensuite par une troisième transaction sans contact qui validera la première transaction. En effet, les trois transactions doivent s'effectuer de manière successive et doivent être cadencées par l'utilisateur qui devra mettre en marche le circuit lecteur de la carte puis l'éteindre.

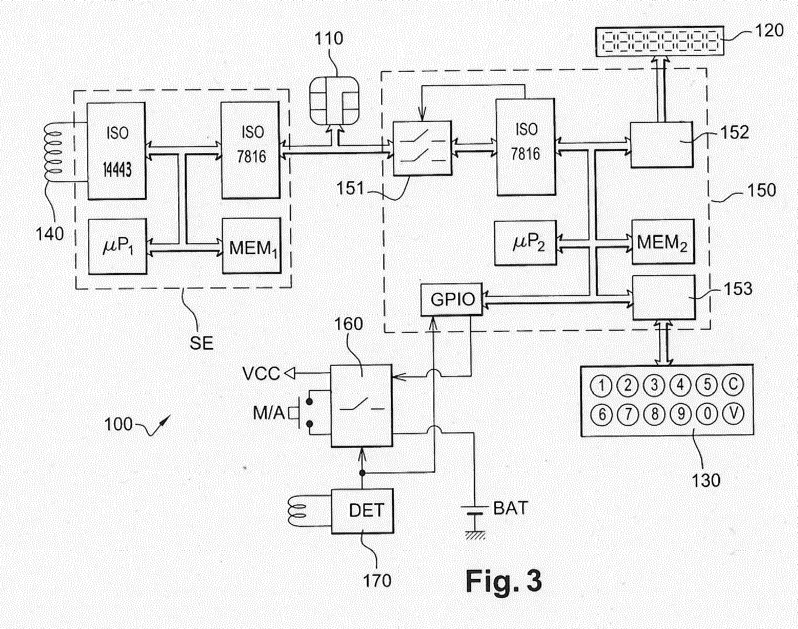

La figure 3 montre un premier mode de réalisation d'une carte de paiement 100 selon l'invention. Afin de mieux comprendre les différents échanges, il convient de détailler un peu plus les circuits déjà dévoilés dans la figure 2 et pour lesquels les mêmes références correspondent aux mêmes circuits. Comme connu de l'état de la technique, le circuit intégré sécurisé SE comporte un microprocesseur µP1 collaborant avec une mémoire MEM1, une interface ISO 7816 et une Interface ISO14443. La mémoire MEM1 est une mémoire composite qui peut comprendre au moins deux types de mémoires différents parmi RAM, ROM, EPROM, EEPROM, Flash. Cette mémoire MEM1 comporte le système d'exploitation ainsi que les différents programmes applicatifs et les données associées qui sont mis en oeuvre dans le microprocesseur µP1 qui agit comme circuit de traitement du circuit intégré sécurisé SE. Cette mémoire MEM1 comporte notamment des registres non volatiles qui permettent de stocker des informations qui subsistent malgré l'absence d'alimentation.

L'interface ISO14443 est reliée à l'antenne 140 afin de recevoir l'énergie provenant d'un champ de communication lorsque la carte à puce 100 est placée à proximité d'un lecteur sans contact. L'interface ISO14443 extrait une partie de l'énergie du champ de communication pour alimenter les autres circuits constituant le circuit intégré sécurisé SE. En outre, l'interface ISO14443 sert aussi à démoduler et à moduler le champ de communication pour échanger des données avec le lecteur sans contact qui produit le champ de communication. L'interface ISO7816 reçoit également une tension d'alimentation pour alimenter le circuit intégré sécurisé SE.

Le microcontrôleur 150 comporte une interface ISO7816 reliée au connecteur 110 via un interrupteur 151 commandé par l'interface ISO7816 du microcontrôleur. L'interrupteur 151 permet de ne connecter l'interface ISO7816 du microcontrôleur 150 qu'en l'absence de connexion de la carte à un lecteur externe. Le microcontrôleur 150 comporte en outre une interface d'affichage 152, une mémoire MEM2, une interface de clavier 153, un microprocesseur µP2 et des ports d'entrée/sortie GPIO. Tous les éléments du microcontrôleur 150 sont reliés au microprocesseur µP2 par l'intermédiaire d'un bus central. L'interface d'affichage 152 est reliée à l'afficheur 120. La mémoire MEM2 est une mémoire composite qui peut comprendre au moins deux types de mémoires différents parmi RAM, ROM, EPROM, EEPROM, Flash. Cette mémoire MEM2 comporte un système d'exploitation ainsi que les différents programmes applicatifs et les données associées qui sont mis en oeuvre dans le microprocesseur µP2. Le microprocesseur µP2 constitue le circuit de traitement du lecteur intégré, ses programmes étant stocké dans une partie non volatile de la mémoire MEM2. Cette mémoire MEM2 comporte notamment des registres non volatiles qui permettent de stocker des informations qui subsistent malgré l'absence d'alimentation. L'interface de clavier 153 est connectée au clavier 130 afin d'en assurer la gestion. Un port de sortie GPIO est relié à une entrée circuit de commutation 160 afin de couper l'alimentation. Un port d'entrée GPIO est relié à une sortie d'un détecteur de champ 170.

La sortie du détecteur de champ 170 est en outre reliée à une autre entrée du circuit de communication 160. Le détecteur de champ comporte une antenne 171 qui permet de détecter la présence d'un champ de communication. Si un champ est présent alors la sortie du détecteur de champ devient active. Lorsque le champ de communication disparaît alors la sortie devient inactive. Un tel circuit de détection est en fait une cellule de type RLC qui s'autoalimente à partir du champ de communication.

Le circuit de commutation 160 est connecté à la batterie BAT ainsi qu'au bouton de mise en route M/A et il fournit sur une sortie la tension d'alimentation VCC qui alimente l'afficheur 120, le clavier 130 et le microcontrôleur 150 et dont les connexions aux différents éléments ne sont pas représentées pour éviter de surcharger les schémas. Bien évidemment la masse est commune à tous les circuits y compris le circuit intégré sécurisé SE.

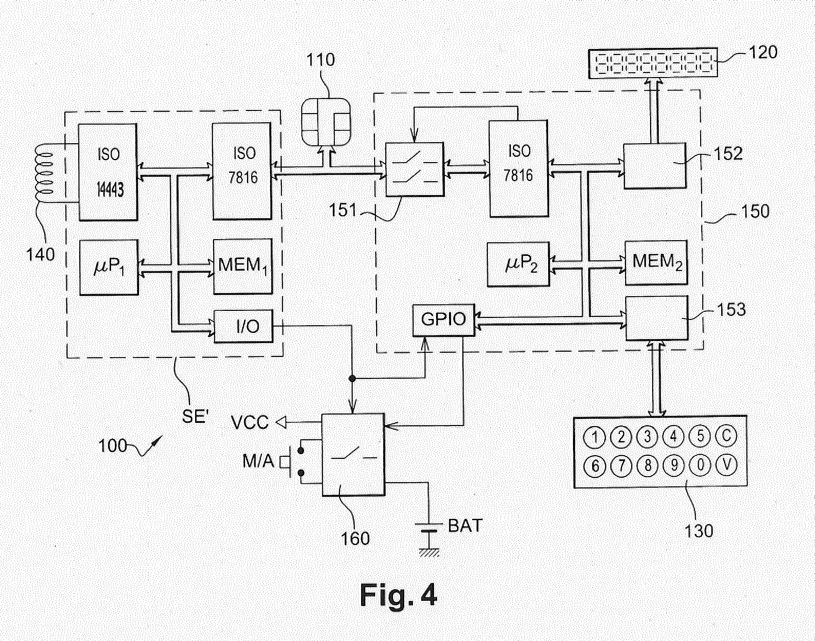

Le circuit de la figure 3 est basé sur un circuit intégré sécurisé SE ne comportant aucune entrée/sortie. Il est possible d'utiliser un circuit intégré sécurisé SE comportant au moins un port de sortie I/O comme montré sur la figure 4. Dans ce cas, le détecteur de champ 170 de la figure 3 peut être remplacé par le circuit intégré sécurisé SE. En outre l'utilisation du circuit intégré sécurisé comme détecteur de champ présente aussi l'avantage de ne signaler la présence d'un champ que si cette présence du champ doit entrainer le réveil du microcontrôleur 150.

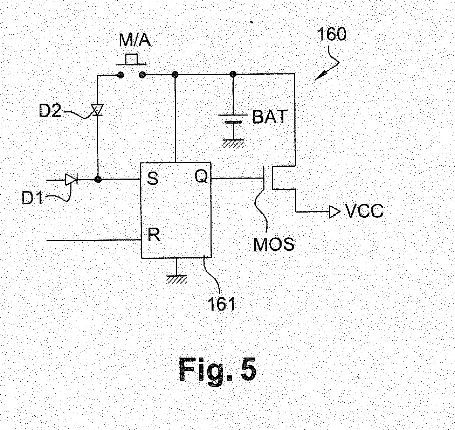

La figure 5 montre un exemple non limitatif de réalisation du circuit de commutation. Une bascule 161 constitue le coeur du circuit de commutation 160. Cette bascule 161 est de type SR ou Set-Reset. L'entrée Reset de la bascule est reliée au port de sortie GPIO du micro contrôleur pour recevoir un signal d'inactivation qui fait basculer la sortie de la bascule 161 à un niveau 0. L'entrée Set de la bascule 161 est reliée par une première diode D1 à la sortie du détecteur de champ 170 et par une deuxième diode D2 au bouton de mise en route M/A. Si le bouton de mise en route est appuyé alors un niveau actif est transmis à l'entrée Set et la sortie de la bascule 161 se trouve positionnée au niveau 1. Si la sortie du détecteur de champ fournit un niveau actif, alors la sortie de la bascule 161 est aussi positionnée au niveau 1. La sortie de la bascule est reliée à la grille d'un transistor MOS dont le drain est relié à la batterie BAT et la source fournit la tension d'alimentation.

Pour les circuits sécurisés, il existe différents modes de gestion des deux interfaces. Un premier mode consiste à couper l'interface ISO14443 dès lors que l'alimentation est détectée sur l'interface ISO7816. Ce premier mode est le plus courant pour circuits sécurisés de carte bancaire car cela permet d'éviter un piratage via l'interface sans contact pendant une transaction via les contacts. Un premier mode de fonctionnement du circuit de la figure 3 consiste à gérer ce premier mode.

Ainsi, lorsque l'utilisateur approche sa carte d'un lecteur sans contact le détecteur de champ 170 envoie un signal actif au circuit de commutation 160 qui se met à fournir la tension d'alimentation au microcontrôleur 150. Afin d'éviter de couper la communication effectuée sur l'interface ISO14443 du circuit intégré sécurisé SE, le micro contrôleur 150 retarde l'activation de l'interface ISO7816 et donc l'alimentation du circuit intégré sécurisé SE.

Selon un premier mode de mise en oeuvre, le retard d'alimentation peut se faire en repérant la disparition du champ via le port d'entrée GPIO. Selon un deuxième mode de mise en oeuvre, le microcontrôleur 150 déclenche une temporisation afin d'alimenter le circuit sécurisé après une durée prédéterminée après la détection du champ de communication, la durée prédéterminée étant supérieure au temps nécessaire à la réalisation d'une transaction sans contact tout en étant assez brève pour un utilisateur, par exemple 200 millisecondes.

En outre l'utilisation d'une temporisation permet d'éviter d'avoir à sortir la carte du champ de communication pour réaliser l'enchainement des transactions.

Le circuit intégré sécurisé SE réalise une première transaction sans contact et si celle-ci nécessite une validation de transaction alors une information de demande de validation de transaction est inscrite dans un registre non volatile. Préférentiellement, le registre non-volatile correspond à un registre qui est fournit lors de l'activation par l'interface ISO7816 dans le premier message de réponse de la carte, également connu sous l'acronyme ATR (Answer-To-Reset).

Le microcontrôleur 150 est programmé comme un lecteur de carte. A la fin de la temporisation (ou après disparition du champ), le microcontrôleur 150 alimente l'interface ISO7816 du circuit intégré sécurisé SE et démarre une séquence de remise à zéro selon la norme ISO7816. A réception de la première réponse de la carte, le micro contrôleur reçoit le contenu du registre indiquant qu'une validation de transaction est requise. Le microcontrôleur lit le montant de la transaction en attente et l'affiche sur l'afficheur afin que l'utilisateur puisse vérifier le montant de manière sure. Après un appui sur une touche de validation V du clavier 130, l'utilisateur va rentrer son code PIN pour autoriser la transaction. Le code PIN est ensuite renvoyé par le microcontrôleur 150 au circuit intégré sécurisé SE via une commande VERIFY PIN. Puis la transaction est validée et le microcontrôleur va réécrire le registre pour indiquer que la transaction est validée. Le microcontrôleur 150 peut à présent envoyer un signal de coupure d'alimentation au circuit de commutation 160.

L'utilisateur peut représenter la carte au lecteur sans contact. Au démarrage, le lecteur sans contact lit le registre du circuit intégré sécurisé SE qui indique que la transaction est validée. Le lecteur sans contact va demander un message de confirmation de transaction. Le circuit intégré sécurisé SE peut alors renvoyer un message encrypté de validation de transaction destiné à un serveur distant. La présence du champ ayant été détecté par le détecteur de champ 170, le microcontrôleur 150 est réveillé. N'ayant pas de transaction en attente, le microcontrôleur attend une action de l'utilisateur pendant une durée d'attente prédéfinie. En l'absence d'action de l'utilisateur pendant la durée d'attente prédéfinie, le microcontrôleur 150 envoie un signal de coupure d'alimentation au circuit de commutation 160.

Dans l'hypothèse ou l'utilisateur n'est pas d'accord avec la transaction, alors il est possible de l'annuler en appuyant sur la touche de correction C du clavier 130. Dans ce cas là le microcontrôleur 150 va réécrire le registre en effaçant la demande de validation de transaction. Le microcontrôleur 150 envoie un signal de coupure d'alimentation au circuit de commutation 160. Il n'est pas nécessaire à ce stade de représenter la carte au lecteur sans contact sauf pour ré-initier une transaction.

Comme indiqué précédemment, il est possible d'avoir des circuits intégré sécurisé SE qui supporte différents modes de gestion des interfaces ISO7816 et ISO14443. Notamment, il est possible que les deux interfaces fonctionnent simultanément ou que l'alimentation via l'interface ISO7816 soit possible pendant une transaction effectuée sans contact via l'interface ISO14443. La coupure systématique de l'alimentation en fin de transaction ISO7816 n'est pas nécessaire mais permet d'économiser la batterie.

En variante conformément à la figure 4, le circuit de détection 170 est remplacé le circuit intégré sécurisé SE. Un avantage est que le circuit intégré sécurisé SE a connaissance de la transaction sans contact effectuée. Ainsi, il n'est pas nécessaire de signaler systématiquement la détection d'un champ de communication. Le port de sortie I/O est dans ce cas activé après la détection du champ de communication et uniquement si la transaction effectuée par l'intermédiaire de l'interface ISO14443 est une transaction qui demande une vérification de code PIN.

## Revendications

1. Dispositif de paiement (100) comportant :
- un circuit intégré sécurisé (SE) disposant d'une interface sans contact (ISO14443), d'une interface à contact (ISO7816) et d'un circuit de traitement (µP1), ledit circuit intégré pouvant être alimenté par son interface à contact ou par son interface sans contact,
- au moins un connecteur (110) relié à l'interface à contact afin de communiquer avec un lecteur externe,
- au moins une antenne (140) reliée à l'interface sans contact, destinée alimenter le circuit intégré sécurisé et à communiquer avec un lecteur émettant un champ de communication,
- un circuit lecteur (120, 130, 150) compatible avec le circuit intégré sécurisé incluant un afficheur (120) et des touches d'entrée (130), le circuit lecteur étant connecté en parallèle sur le connecteur,
- une batterie autonome (BAT) pour alimenter le circuit lecteur,
caractérisé en ce qui comporte en outre un circuit de commutation d'alimentation (160) relié à un circuit de détection de champ de communication (170, SE) apte à alimenter le circuit lecteur après détection d'un champ de communication.

2. Dispositif selon la revendication 1, dans lequel le circuit de détection de champ de communication est le circuit sécurisé (SE) qui dispose d'une sortie (I/O) connectée au circuit de commutation (160) pour signaler la détection d'un champ de communication.

3. Dispositif selon la revendication 1, lequel le circuit de détection de champ de communication est un circuit indépendant (170) du circuit sécurisé (SE), ledit circuit de détection (170) étant relié au circuit de commutation d'alimentation (160).

4. Dispositif selon la revendication 1, dans lequel le circuit lecteur (120, 130, 150) dispose d'une temporisation afin d'alimenter le circuit sécurisé après une durée prédéterminée après la détection du champ de communication.

5. Dispositif selon la revendication 1, dans lequel le circuit lecteur alimente le circuit sécurisé après disparition du champ de communication.

6. Dispositif selon la revendication 2, dans lequel le circuit sécurisé déclenche le circuit de communication d'alimentation après la détection du champ de communication uniquement s'il s'agit d'une transaction qui demande une vérification de code PIN

7. Dispositif selon l'une des revendications 4 à 6, dans lequel le circuit lecteur coupe l'alimentation du circuit intégré sécurisé sur détection d'un champ de communication.

8. Dispositif selon la revendication 1, dans lequel le dispositif a une forme extérieur de carte bancaire.

9. Dispositif selon la revendication 1, dans lequel l'interface à contact est conforme à la norme ISO7816.

10. Dispositif selon la revendication 1, dans lequel que l'interface sans contact est conforme à la norme ISO14443.

11. Procédé d'alimentation d'un dispositif de paiement (100) comportant un circuit intégré sécurisé (SE) disposant d'une interface sans contact (ISO14443), d'une interface à contact (ISO7816) et d'un circuit de traitement (µP1), ledit circuit intégré pouvant être alimenté par son interface à contact ou par son interface sans contact, ledit dispositif comportant un circuit lecteur (120, 130, 150) compatible avec le circuit intégré sécurisé incluant un afficheur et des touches d'entrée, le circuit lecteur étant connecté en parallèle sur un connecteur (110) de l'interface à contact et étant alimenté par batterie autonome (BAT), **caractérisé en ce que** le procédé consiste à alimenter le circuit lecteur après détection d'un champ de communication.

12. Procédé selon la revendication 11, dans lequel le circuit lecteur alimente le circuit sécurisé après une durée prédéterminée après la détection du champ de communication.

13. Procédé selon la revendication 11, dans lequel le circuit lecteur alimente le circuit sécurisé après la disparition du champ de communication.

14. Procédé selon la revendication 11, dans lequel le circuit sécurisé déclenche le circuit de communication d'alimentation après la détection du champ de communication uniquement s'il s'agit d'une transaction qui demande une vérification de code PIN

15. Procédé selon l'une des revendications 12 à 14, dans lequel le circuit lecteur coupe l'alimentation du circuit intégré sécurisé sur détection d'un champ de communication.
